# EUROPEAN PATENT APPLICATION

(11) **EP 4 651 464 A1**
(43) Date of publication of application: **19.11.2025**
(21) Application number: 24753606.3
(22) Date of filing: 06.02.2024
(51) Int. Cl.: H04L 65/1096, G06T 19/00, H04W 4/16

(54) **METHOD AND DEVICE FOR CARRYING OUT MEDIA CALL SERVICE SUPPORTING ACCESSIBILITY ENHANCEMENT**

(30) Priority: 10.02.2023 KR 20230017765
(71) Applicant: Samsung Electronics Co., Ltd., Suwon-si, Gyeonggi-do 16677 (KR)
(72) Inventor: BAE, Jaehyeon, Suwon-si, Gyeonggi-do 16677 (KR); YANG, Hyunkoo, Suwon-si, Gyeonggi-do 16677 (KR); GUTTMAN, Erik, Staines, Middlesex TW18 4QE (GB)
(74) Representative: HGF
(86) International application number: PCT/KR2024/001738
(87) International publication number: WO 2024/167281

(57) **Abstract**

The present disclosure relates to a 5G or 6G communication system for supporting a higher data transmission rate. The present disclosure relates to an IMS multimedia telephony system for accessibility enhancement. A method for an originating terminal carrying out a media call service in a wireless communication network, according to one embodiment, may comprise the operations of: transmitting, to a terminating terminal or an IMS AS, a SDP offer in a SIP message including information indicating one or more media types for accessibility enhancement and information on whether the originating terminal supports respective requirements of the one or more media types; and, as a response to the SDP offer message, receiving, from the terminating terminal, a SDP response message including information on whether the terminating terminal supports the one or more media types for accessibility enhancement.

## Description

### [Technical Field]

The disclosure relates to a media call service that supports accessibility enhancement, and more specifically, to a method and device for generating and processing sign language motion information using a 3D avatar according to the language of the counterpart user based on sign language information of users who use different languages.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication. Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

Following the pursuit of high-resolution video multimedia, (e.g., standard definition (SD), high definition (HD), ultra-high definition (UHD)), the next immersive experience in multimedia is 360-degree video and 3D volumetric content.

By utilizing 3D volumetric content, the user may produce a 3D data (3D asset) file in the form of a 3D object from the video captured by multiple cameras. Thus, the user may combine the real environment with a virtual 3D object in an AR and metaverse environment, positioning the object at a desired location and enabling the user to view the video with a sense of depth in any arbitrary direction.

3D volumetric content may still use conventional 2D video codecs or binary compression methods for compression. However, the support for 3D volumetric content requires new technology in an end-to-end workflow. Such technology may include a scene description technology for configuring a scene and defining components, 3D object geometry information for configuring 3D objects and texture information, a new format that supports the connection and compression of these 3D object components, a new format that includes, e.g., information about the expressions and connection with the 3D object data for expressing and supporting the movement (e.g., animation) of 3D objects, media processing technology for reducing the format redundancy, a new delivery protocol and a mechanism for increasing the efficiency of content delivery.

Although much work and research have been conducted in relation to recent metaverse and AR for 3D volumetric content, a conversational service for 3D volumetric content (e.g., 3D avatars) has not yet been considered in detail. By using the existing infrastructure of 5G for conversational multimedia services utilizing IP multimedia subsystem (IMS), additional parameters and procedures may be required for each new form of media and use case to support various forms of multimedia.

In order to provide a service to enhance user accessibility in a conversational multimedia service using the 3D volumetric content, the motion of the user using sign language is recognized and converted into text form. When users of different UEs use a conversational service using sign language based on different languages, the text is converted into a common language separately and transmitted and reconverted based on the language used by the user of the counterpart UE in the application server (AS) providing a media function in the counterpart UE or the network. Sign language content based on the language of the terminating user is generated based on the sign language content of the user of the originating UE based on the language of the counterpart user (terminating UE user) in the application server for supporting an accessibility enhancement service. In this case, the sign language content may be converted and represented as an avatar gesture based on the sign language motion used by the user of the terminating UE, and by transferring the motion information or video information of the motion to the user of the terminating UE, a sign language-based conversational service with the originating user may be provided.

### [Detailed Description of the Invention]

### [Technical Problem]

The disclosure provides a method and device for providing a conversational service that supports accessibility enhancement.

### [Technical Solution]

According to an embodiment, a method for performing a media call service of an originating user equipment UE in a wireless communication network may comprise transmitting, to a terminating UE, a first session description protocol (SDP) offer message including information indicating a media type supporting at least one accessibility enhancement and media parameter information supporting the at least one accessibility enhancement. The method for performing the media call service of the originating UE may comprise receiving, from the terminating UE, an SDP answer message including information about whether the terminating UE supports the media type supporting the at least one accessibility enhancement in response to the SDP offer message. The method for performing the media call service of the originating UE may comprise generating the media information supporting the at least one accessibility enhancement based on the information about whether the terminating UE supports included in the SDP answer message. The method for performing the media call service of the originating UE may comprise performing a call service supporting accessibility enhancement with the terminating UE using motion information of media supporting the at least one accessibility enhancement.

According to an embodiment, a method for performing a media call service of a terminating UE in a wireless communication network may comprise receiving, from an originating UE, a session description protocol (SDP) offer message including information indicating a media type supporting at least one accessibility enhancement and information about whether the originating UE supports media-related information supporting the at least one accessibility enhancement. The method for performing the media call service of the terminating UE may comprise transmitting, to the originating UE, an SDP answer message including information about whether the terminating UE supports media supporting the at least one accessibility enhancement in response to the first SDP offer message; The method for performing the media call service of the terminating UE may comprise generating the media information supporting the at least one accessibility enhancement based on the information about whether the terminating UE supports included in the SDP answer message. The method for performing the media call service of the terminating UE may comprise performing a call service supporting accessibility enhancement with the originating UE using the media information.

According to an embodiment, an originating UE for performing a media call service in a wireless communication network comprises a transceiver, and a processor configured to control the transceiver. The processor is configured to transmit, to a terminating UE, a first session description protocol (SDP) offer message including information indicating a media type supporting at least one accessibility enhancement and information about whether the originating UE supports media information supporting the at least one accessibility enhancement, receive, from the terminating UE, an SDP answer message including information about whether the terminating UE supports the media information supporting the at least one accessibility enhancement in response to the first SDP offer message, generate the media information supporting the at least one accessibility enhancement based on the information about whether the terminating UE supports included in the SDP answer message, and control to perform a call service supporting accessibility enhancement with the terminating UE using the generated media information supporting the accessibility enhancement.

According to an embodiment, a terminating UE for performing a media call service in a wireless communication network comprises a transceiver, and a processor configured to control the transceiver. The processor is configured to receive, from an originating UE, a first SDP offer message including information indicating a media type supporting at least one accessibility enhancement and information about whether the originating UE supports media supporting the at least one accessibility enhancement, transmit, to the originating UE, an SDP answer message including information about whether the terminating UE supports media supporting the at least one accessibility enhancement in response to the first SDP offer message, generate the media information supporting the at least one accessibility enhancement based on the information about whether the terminating UE supports included in the SDP answer message, and control to perform a call service supporting accessibility enhancement with the originating UE using the generated motion information.

### [Advantageous Effects]

A method and device according to an embodiment of the disclosure may convert sign language information of users using different languages into each user's language in the network, and provide sign language content data using a 3D avatar and movement variation information of a 3D avatar object, enhancing accessibility to a conversational service.

### [Brief Description of Drawings]

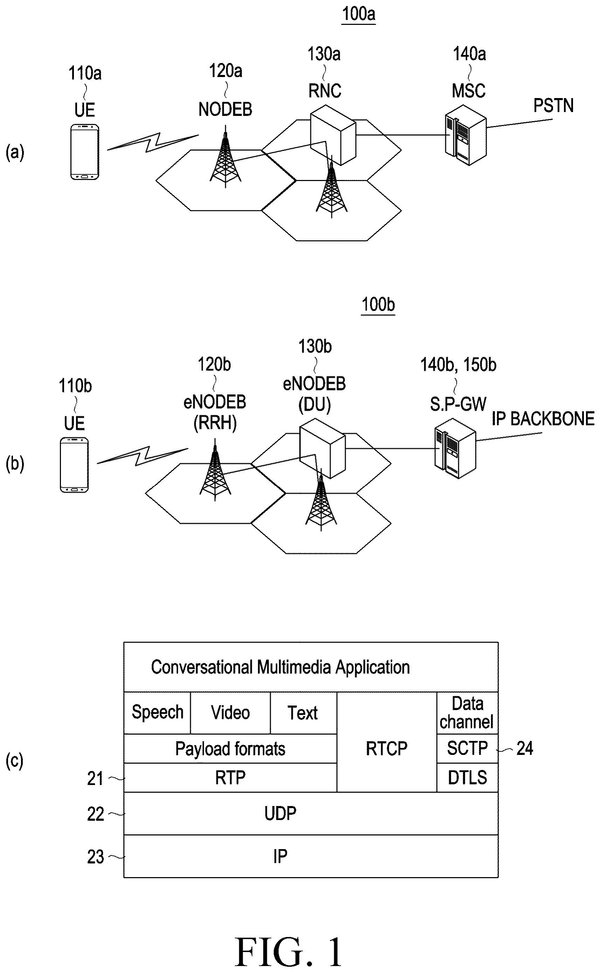

FIG. 1(a) and FIG. 1(b) illustrate the structure of a third generation (3G) network, and FIG. 1(c) illustrates the structure of voice and video codecs and real-time transport protocol (RTP)/user datagram protocol (UDP)/Internet protocol (IP) protocols of a voice over LTE (VoLTE) support UE according to an embodiment of the disclosure.

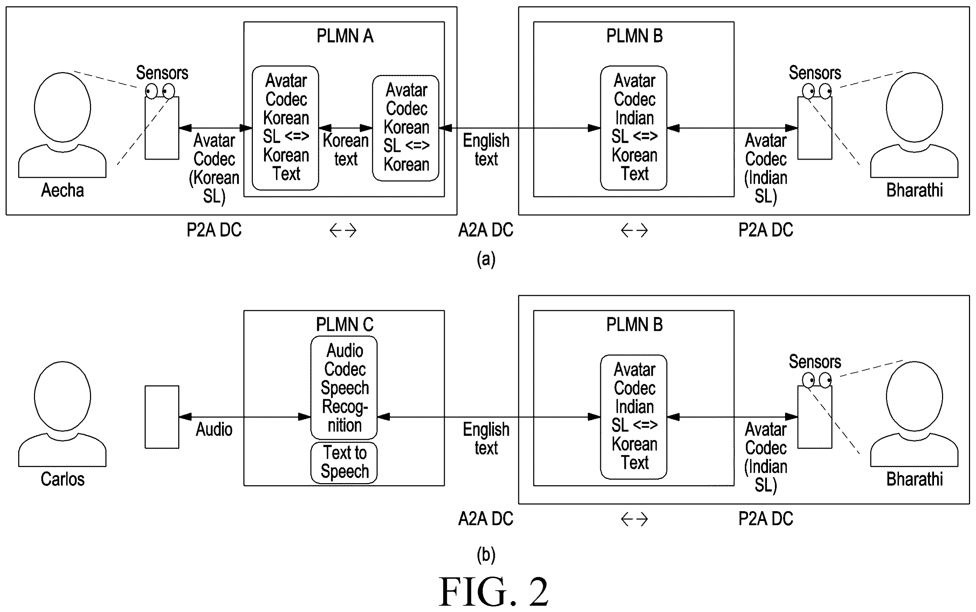

FIG. 2(a) illustrates an example of an operation of communicating using sign language in different languages based on a service supporting IMS service for accessibility enhancement according to an embodiment of the disclosure, and FIG. 2(b) illustrates an example of using an IMS multimedia telephony service between the user Carlos using a general voice-based conversational service and the user Bharati using a sign language-based conversational service.

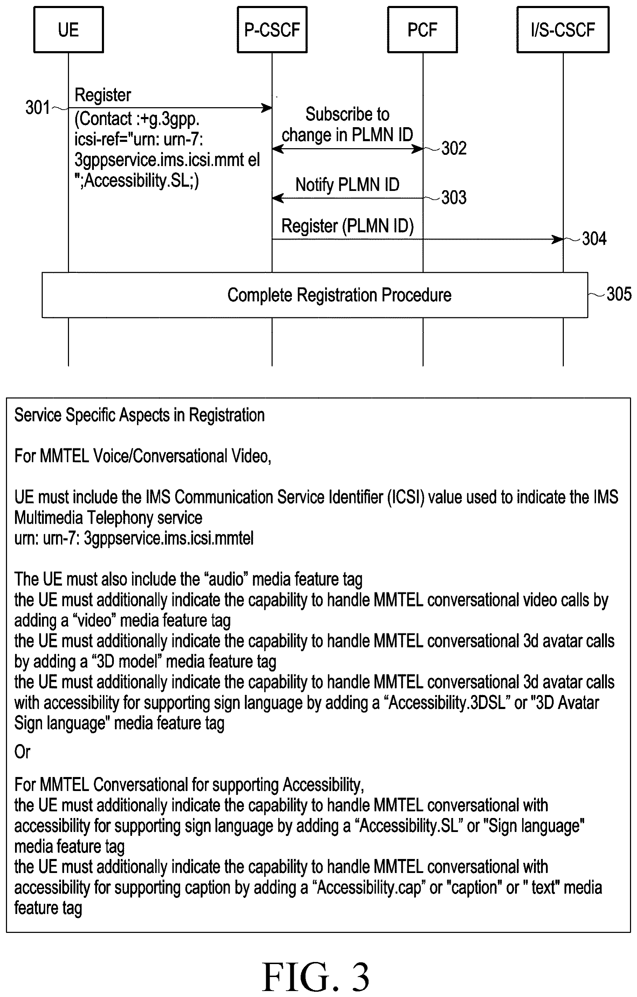

FIG. 3 illustrates an IMS network registration procedure of a UE with IMS communication service support information for accessibility enhancement of the UE using a media feature tag for accessibility enhancement when registering the UE in an IP multimedia subsystem (IMS) according to an embodiment of the disclosure.

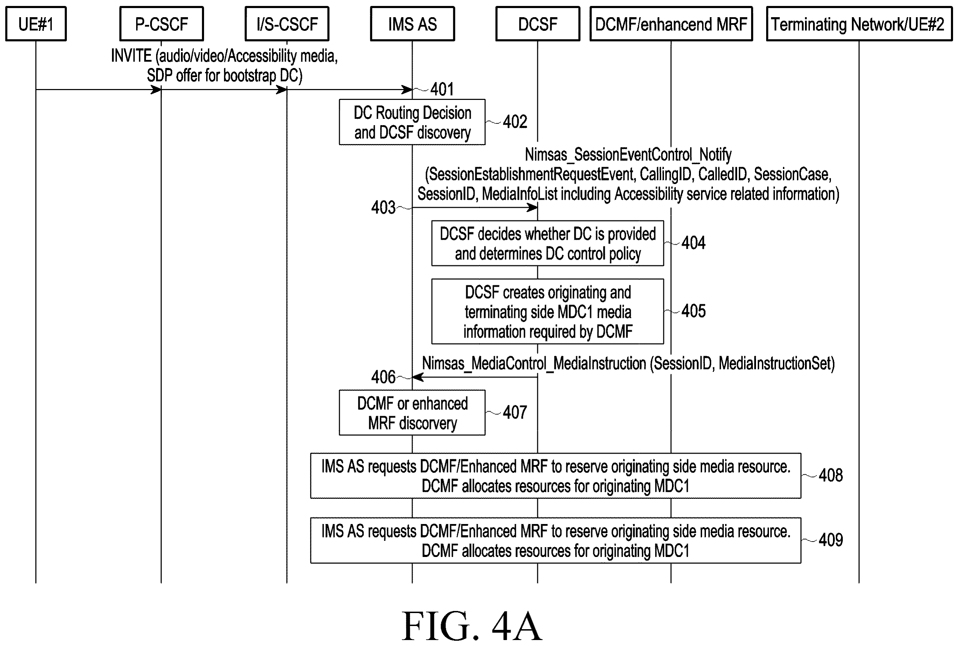

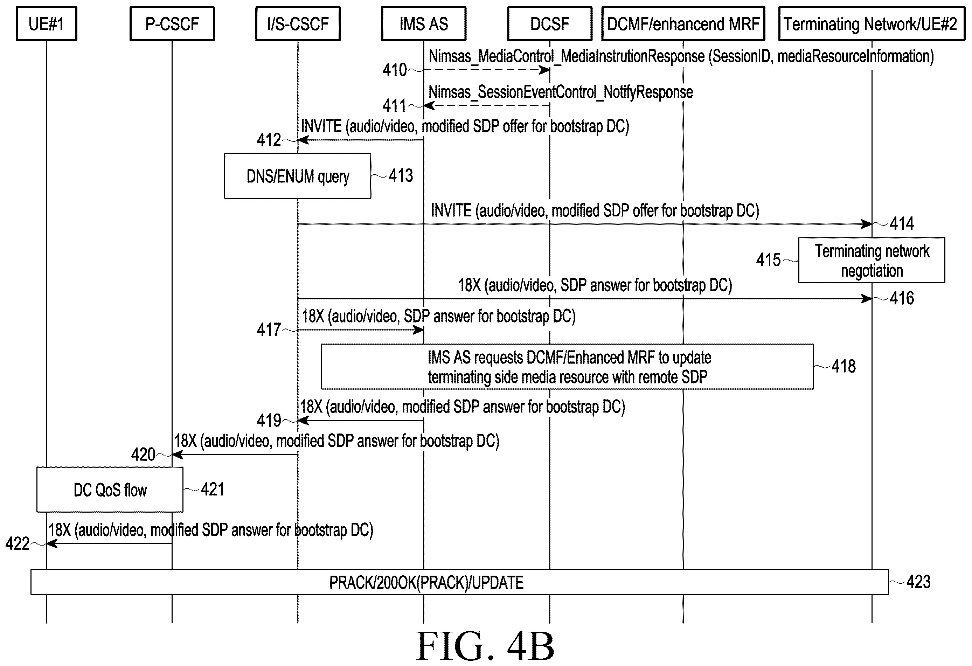

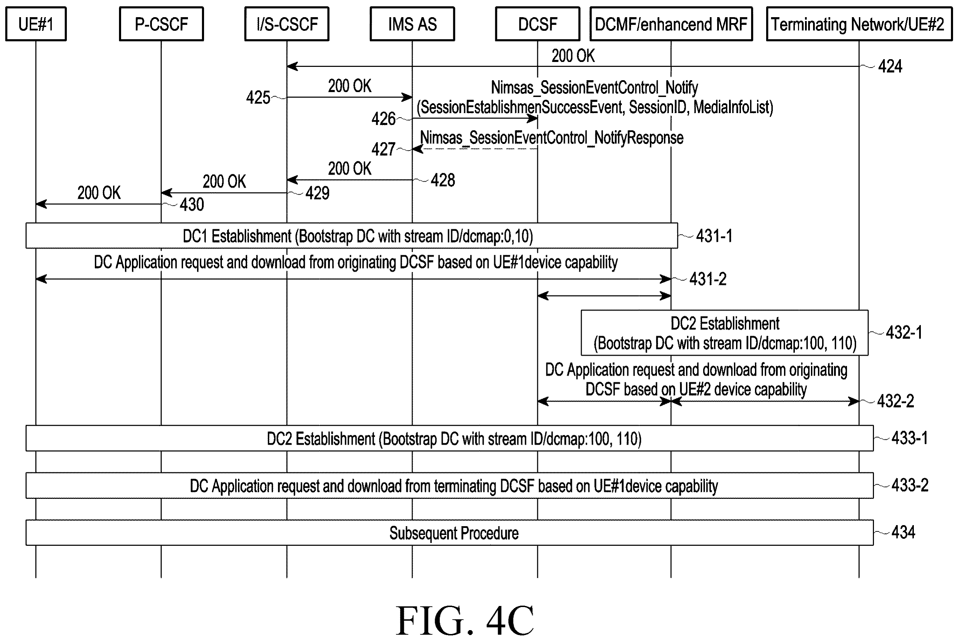

FIGS. 4A, 4B, and 4C illustrate operations for bootstrap data channel connection for supporting an IMS communication service for accessibility enhancement in an IP multimedia subsystem (IMS) according to an embodiment of the disclosure.

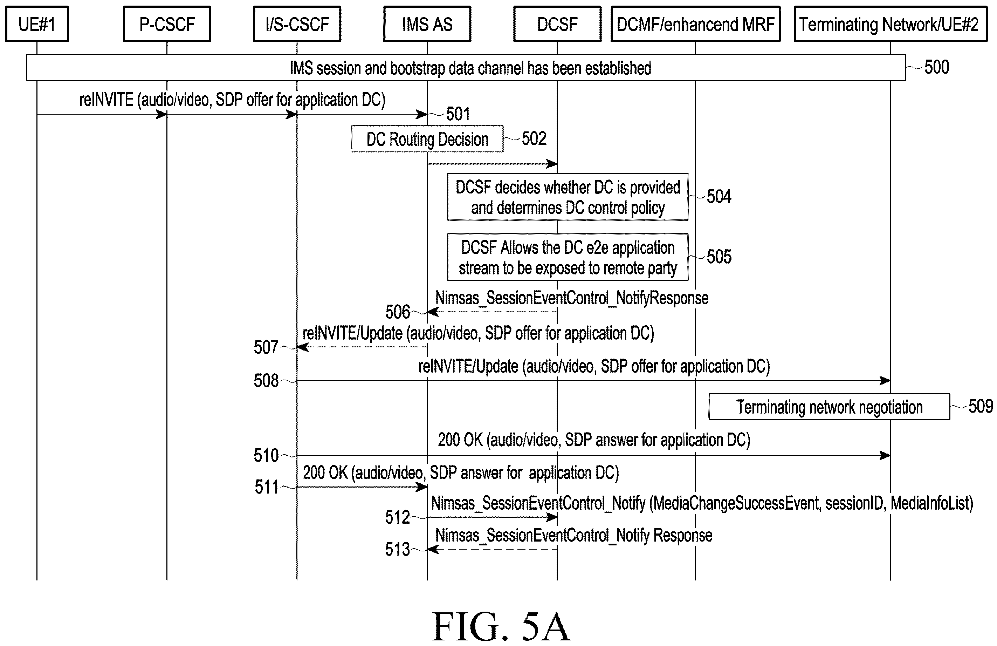

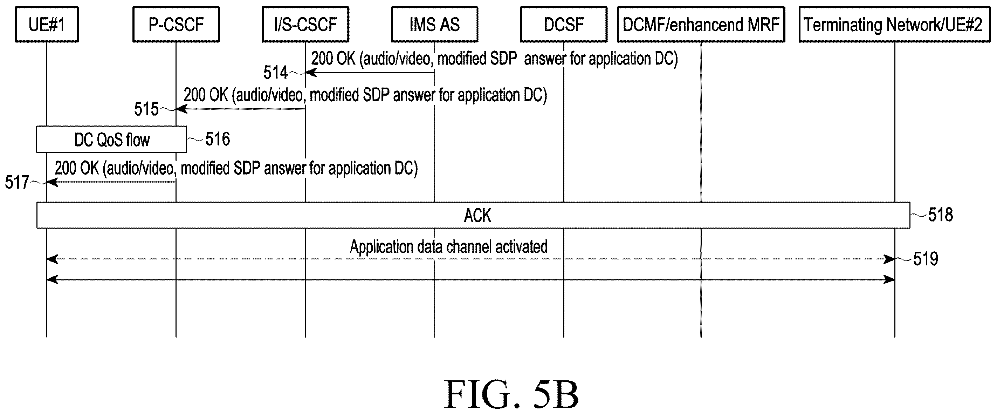

FIGS. 5A and 5B illustrate an application data channel connection establishment process for transmission of data between UEs using a corresponding application after receiving downloading a relevant service-related application and receiving information through bootstrap data channel connection establishment according to an embodiment of the disclosure.

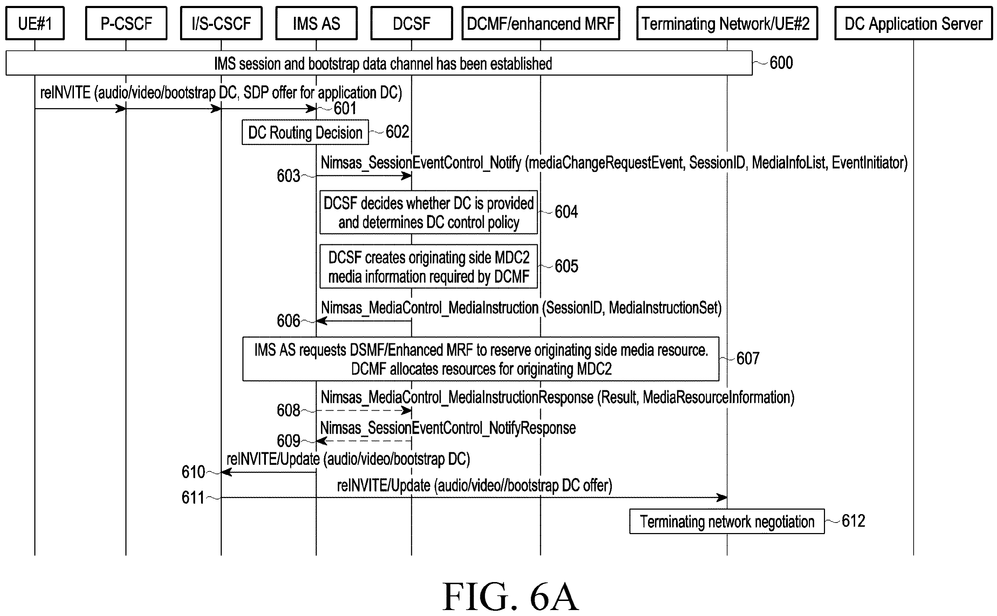

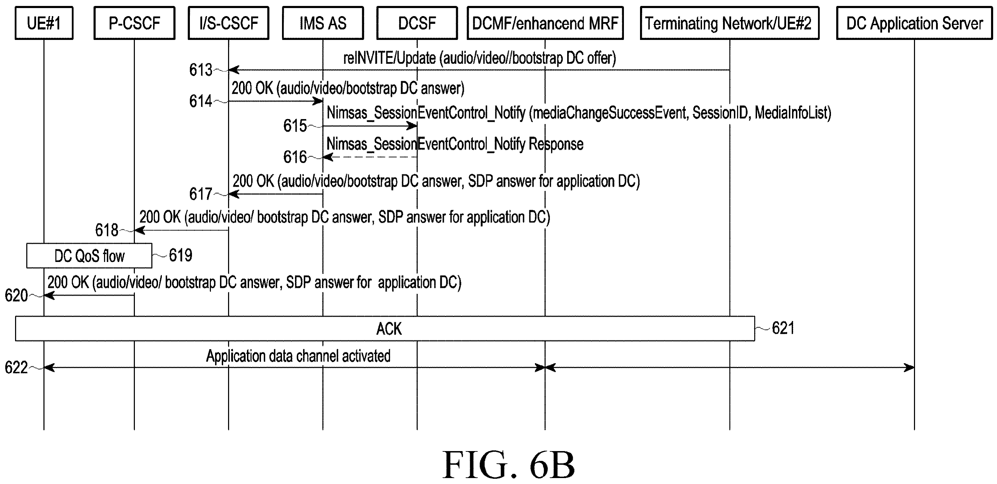

FIGS. 6A and 6B illustrate an application data channel connection establishment process for transmission of data between UEs using a corresponding application after receiving downloading a relevant service-related application and receiving information through bootstrap data channel connection establishment according to an embodiment of the disclosure.

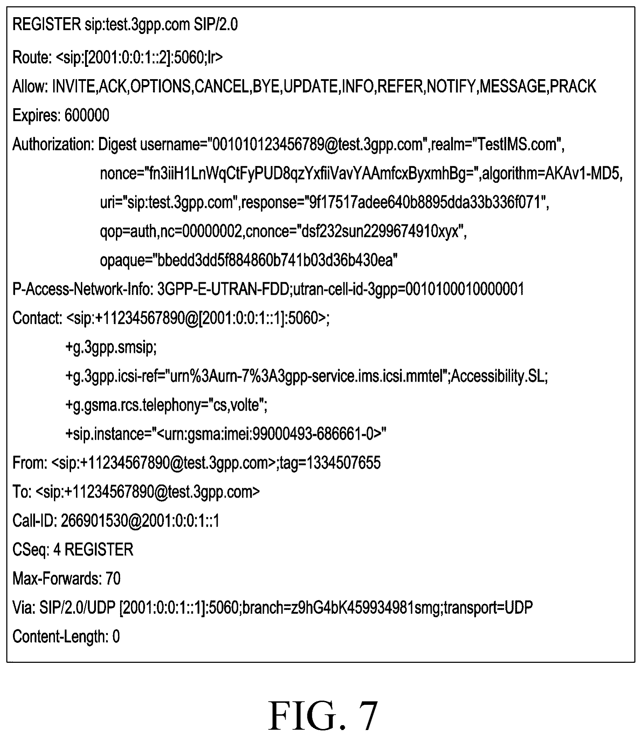

FIG. 7 illustrates an example of the register message illustrated in FIG. 3 according to an embodiment of the disclosure.

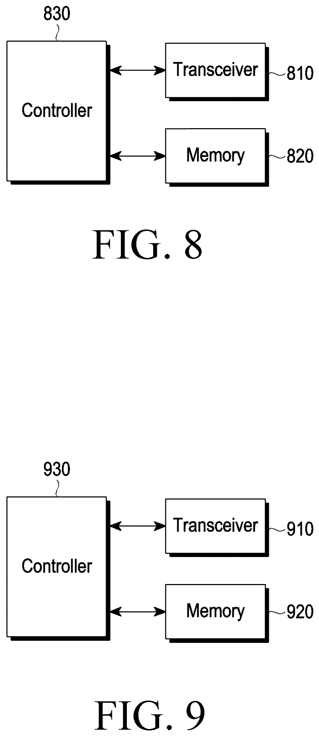

FIG. 8 illustrates a structure of a UE according to an embodiment of the disclosure.
FIG. 9 illustrates a structure of a network entity according to an embodiment of the disclosure.

### [Mode for Carrying out the Invention]

Hereinafter, embodiments of the disclosure are described in detail with reference to the accompanying drawings.

In describing embodiments, the description of technologies that are known in the art and are not directly related to the present invention is omitted. This is for further clarifying the gist of the present disclosure without making it unclear.

For the same reasons, some elements may be exaggerated or schematically shown. The size of each element does not necessarily reflects the real size of the element. The same reference numeral is used to refer to the same element throughout the drawings.

Advantages and features of the present disclosure, and methods for achieving the same may be understood through the embodiments to be described below taken in conjunction with the accompanying drawings. However, the present invention is not limited to the embodiments disclosed herein, and various changes may be made thereto. The embodiments disclosed herein are provided only to inform one of ordinary skilled in the art of the category of the present disclosure. The present invention is defined only by the appended claims.

It should be appreciated that the blocks in each flowchart and combinations of the flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide steps for executing the functions described in connection with a block(s) in each flowchart.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, 'unit' is not limited to software or hardware. A 'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. According to embodiments of the disclosure, a "...unit" may include one or more processors.

As used herein, the term 'terminal' or 'device' may also be referred to as a mobile station (MS), user equipment (UE), user terminal (UT), terminal, wireless terminal, access terminal (AT), subscriber unit, subscriber station (SS), wireless device, wireless communication device, wireless transmit/receive unit (WTRU), mobile node, or mobile or may be referred to in other terms. Various embodiments of the terminal may include cellular phones, smart phones with wireless communication capabilities, personal digital assistants (PDAs) with wireless communication capabilities, wireless modems, portable computers with wireless communication capabilities, capturing/recording/shooting/filming devices, such as digital cameras, having wireless communication capabilities, game players with wireless communications capabilities, music storage and playback home appliances with wireless communications capabilities, Internet home appliances capable of wireless Internet access and browsing, or portable units or terminals incorporating combinations of those capabilities. Further, the terminal may include a machine to machine (M2M) terminal and a machine-type communication (MTC) terminal/device, but is not limited thereto. In the disclosure, the terminal may be referred to as an electronic device or simply as a device.

The terms as used herein are defined considering the functions in the present disclosure and may be replaced with other terms according to the intention or practice of the user or operator. Therefore, the terms should be defined based on the overall disclosure.

The disclosure relates to multimedia content capturing, processing, pre-processing, post-processing, metadata delivery, conversion of text based on the user's sign language information and conversion of related text into a common language, delivery of the common language, re-conversion of the common language according to the user's language setting, conversion of the text information of the counterpart user's sign language information re-converted according to the UE's user setting into a sign language motion of the 3D object content (avatar), delivery of the same, and decoding and rendering of the 3D object content representing the sign language motion of the avatar in the UE. In the disclosure, the 3D avatar content may refer to a 3D asset file in the form of a mesh composed of 3D object geometry and texture, or a 3D asset file in the form of a point cloud compression (PCC) composed of 3D projection images and 3D object geometry information.

3D content may be consumed using head mounted devices (HMDs) and augmented reality (AR). However, due to the nature of the content, the user may not view 3D content composed of 360 degrees at a time, but may view only a portion thereof considering the view direction shown through the user's viewpoint referred to as an arbitrary camera in the virtual space. For this reason, the entire 3D object requires a very high resolution to provide content that considers a view direction of sufficiently high quality at an arbitrary location.

Due to the high-resolution requirement of 3D object content, there are many technologies that attempt to save bandwidth (BW) for delivery. A 3D content transmission device may receive input from multiple cameras to represent one or more objects within a space, as transmitting all the 3D objects with high-definition multi-cameras requires a substantial amount of bandwidth. Further, the 3D content transmission device may create the input as a 3D object based on the multi-camera information and may transform the same into a mesh or PCC form to compress each of the 3D objects in an easy-to-transmit method, and may represent the relationship between 3D objects in a single scene description. For example, the 3D content transmission device may compress images/videos and generate content with appropriate parameters (geometry point and texture resolution) in consideration of the rendering performance of bandwidth and UE (display resolution, memory, etc.) for the mesh-form object and, in the case of PCC, the device may generate 3D object content by adjusting the number of points for representing the object to reflect the requirements of the network and the transmission/resolution UE.

Conversational services require very low latency to support two-way communication, and additional requirements arise when used to transmit content for conversational services for the above-described accessibility enhancement. The disclosure may capture the user's sign language motion to recognize the user's motion, convert the same into text, convert the text representing the sign language motion into a common language, generate the content representing the avatar-based sign language motion and movement according to the counterpart or network operator's settings and, when using a conversational service for accessibility enhancement, transfer only the movement variation of the object or video-from avatar sign language content to each UE, thereby providing a conversational service for accessibility enhancement of users who use sign language based on different languages.

The disclosure introduces a method for providing an accessibility enhancement service and a process of performing a service connection operation based on related information by transferring related parameters to the network. By defining a new media type and related parameters for accessibility enhancement in the session initiation protocol (SIP), the transmitter/receiver does not require a separate additional operation and may request media service-related media functions for accessibility enhancement based on corresponding parameters from the network, download a related application, and exchange its sign language information through the corresponding data channel. Further, it may transfer requirements for the media function to be supported or requested in the network considering the performance of the UE and the network.

In the disclosure, the originating UE may register a service request for desired accessibility enhancement in the network in the IMS registration process to use an IMS multimedia telephony service supporting accessibility enhancement, and the IMS network may grasp the priority based on the stored information, set the service (sign language service or caption service) supporting accessibility enhancement to have the highest priority and, when the user requests a conversational service, provide the media function for supporting the same to the network. Further, it may also generate avatar-based sign language information based on avatar-based gesture information even in services for accessibility enhancement based on other languages, such as using different sign languages and, based thereon, provide a service supporting accessibility enhancement.

FIG. 1(a) illustrates a 3G network structure.

In FIG. 1(a), a 3G network 100a may include a user device (UE) 110a, a NodeB 120a, a radio network controller (RNC) 130a, and a mobile switching center (MSC) 140a. The 3G network 100a may be connected to other mobile communication networks and the public switched telephone network (PSTN). In the 3G network 100a, the voice may be compressed or restored using an adaptive multi-rate (AMR) codec, and the AMR codec may be installed in the UE 110a and the MSC 140a to provide a two-way call service.

The MSC 140a may convert the voice compressed with the AMR codec into a pulse code modulation (PCM) format, transmit it to the PSTN, or vice versa, the MSC 140a may receive the voice in the PCM format from the PSTN, compress it with the AMR codec, and transmit it to the base station (NodeB) 120a. The RNC 130a may control the call bit rate of the voice codec installed in the UE 110a and the MSC 140a in real-time using a codec mode control (CMC) message.

As the packet-switched network (LTE) is introduced in 4G (LTE), the voice codec is installed only in the UE, and the voice frame compressed at an interval of 20 ms in the originating UE may be transmitted to the counterpart UE (counterpart terminal) without being restored at the base station or the network node positioned in the middle of the transmission path.

FIG. 1(b) illustrates the structure of an LTE network.

In FIG. 1(b), an LTE (4G) network 100b may include at least one of a UE 110b, an eNodeB 120b, 130b, and a serving gateway (S-GW)/packet data network gateway (P-GW) 140b, 150b.

In FIG. 1(b), the voice codec is installed only in the UE 110b, and each UE 110b may adjust the voice bit rate of the counterpart UE using a codec mode request (CMR) message.

In FIG. 1(b), the eNodeB 120b, 130b, which is a base station, may be divided into a remote radio head (RRH) 120b dedicated to RF functions and a digital unit (DU) 130b dedicated to modem digital signal processing. The eNodeB 120b, 130b may be connected to an IP backbone network through the S-GW 140b and the P-GW 150b. The IP backbone network may be connected to a mobile communication network or the Internet of another service provider.

FIG. 1(c) illustrates the structure of voice and video codecs and RTP/UDP/IP protocols of a VoLTE support UE and stream control transmission protocol (SCTP)/UDP/IP protocol according to an embodiment of the disclosure.

Referring to FIG. 1(c), the IP protocol positioned at the bottom of the SCTP/UDP/IP protocol structure may be connected to the packet data convergence protocol (PDCP) positioned at the top of the protocol structure. In FIG. 1(c), media data (e.g., speed, video, text) may be transmitted through the RTP protocol/UDP protocol/IP protocol, and additional information related to the media may be transmitted through the SCTP protocol/UDP protocol/IP protocol.

The RTP/UDP/IP header may be attached to the compressed media frame (media data) of the voice and video codec, and the STCP/UDP/IP header may be added to media-related additional information and transmitted to the counterpart UE through the LTE network. The counterpart UE may receive a media packet (media data) compressed and transmitted from the network, restore media, listen through a speaker, display media, and view media. In this case, even when the compressed voice packet and video packet do not arrive at the same time, timestamp information of the RTP protocol header may be used to synchronize the two media (voice and video).

FIG. 2(a) illustrates an example of an operation of communicating using sign language in different languages based on a service supporting an IMS service for accessibility enhancement according to an embodiment of the disclosure.

For example, a user named Aecha in Korea may use Korean-based sign language, and a remote communication partner Bharathi may use Hindi-based sign language, and each user may perform IMS communication using sign language. Since the users communicate using sign language created based on different languages, they may not understand each other's sign language.

According to an embodiment of the disclosure, the UE or the network may convert the sign language used by each user into a text form (e.g., converting Hindi-based sign language into Hindi text and Korean-based sign language into Korean text) formed in the base language of each sign language and then convert the same into a common language or default language (i.e., converting into English or the language selected according to the policy of the network operator of each media conversion application server (AS) or the service operator) and transfer the same. If in the above example, no translation service is provided in the IMS service of the Korean operator, the Korean-based text may be transferred to the counterpart Indian IMS service to translate the same into Hindi and, based thereon, generation of an avatar-based sign language service may be requested.

FIG. 2(a) assumes that a media conversion function is provided which converts the sign language expressed by the user in the IMS service network of each UE and converts the same into the default language. For example, Aecha's sign language may be converted into Korean-based text in the IMS service network in Korea, and the result of conversion into English may be transferred to the Indian IMS network of the counterpart Bharathi.

The Indian IMS network which receives Aecha's sign language information converted into English-based text translates the same back into Hindi and converts the same into an avatar motion based on the translated Hindi-based Aecha sign language information. Accordingly, to express the Hindi-based sign language, it may be expressed by a virtual avatar or a desired avatar according to the user's selection, and Hindi-based sign language information may be expressed using, e.g., the avatar's facial expression and the avatar's gesture and sign language.

The avatar motion-based sign language information generated in the network may be transmitted in the existing RTP-based video form considering, e.g., the UE and network performance or, if the UE has UE and network performance capable of performing avatar-based rendering operation, avatar animation information composed of avatar gesture information may be transferred, and an avatar-based sign language service may be used using an avatar, such as the user's own appearance or an avatar of his favorite actor using the avatar in the UE.

In FIG. 2(a), an avatar which expresses Hindi-based sign language may be generated in Bharathi's IMS network based on Aecha's information and, considering Bharathi's UE and network environment, for the avatar's gesture expressing Aecha's sign language motion, only avatar gesture information may be transferred to Bharathi's UE in the form of an avatar codec, so that Bharathi's UE may provide an avatar-based sign language service to convert Aecha's Korean-based sign language information into Hindi-based sign language.

In FIG. 2(a), like Aecha, Bharathi may transfer Hindi-based sign language information to the network and, based thereon, convert the Hindi-based sign language information into Hindi-based text and convert/translate the Hindi-based text information and transfer the same to Aecha's network. According to the settings of the UE or application, sign language information may be transferred in video form directly to the network, or the UE may convert the same into Hindi text based on Bharathi's gesture information and transfer the same to the network. It is transferred to the media function in Aecha's IMS network receiving the Hindi text-based sign language information, and the Korean-based avatar sign language service generation operation is performed based on Korean text-based Bharathi sign language information. The Korean-based Bharathi sign language information converted into the generated avatar gesture may be transferred in video or avatar gesture form to Aecha considering Aecha's UE and network environment, so that Aecha may view Bharathi's sign language information generated based on the Korean avatar gesture.

In the above example, text may be generated based on the sign language gesture information in each IMS network to use the IMS communication service using sign language based on different languages, and the same may be changed into default language and transferred to the IMS network supporting counterpart accessibility enhancement using the IMS data channel.

FIG. 2(b) illustrates an example of using an IMS multimedia telephony service between Carlos who is the user using a general voice-based conversational service and Bharathi who is the user using a sign language-based conversational service.

For example, Carlos may transfer a voice-based conversational service connection request using an SDP offer to Bharathi for a service connection request. Bharathi receiving the same may transfer a sign language-based conversational service connection request to Carlos through an SDP answer. Carlos receiving the SDP answer message knows that use of the IMS service for accessibility enhancement is needed and, to that end, may request data channel connection from the IMS AS and request the media function for supporting a voice-based service and a sign language-based service from the IMS server. To that end, Carlos may request a media function for converting voice into text for IMS service for accessibility enhancement from its own IMS network, and Carlos may transfer RTP-based voice to the network entity providing the media function and transfer the text information coming through the conversion function to the network entity providing the function for accessibility enhancement in Bharathi's IMS network through the data channel.

In Bharathi's IMS network, sign language information generation operation may be performed using the avatar gesture based on the text information received as in FIG. 2(a). It may be provided in RTP-based video form according to Bharathi's UE or network environment or the so-generated avatar gesture information. Through this, Bharathi may convert Carlos's voice information into avatar gesture-based sign language information and use a conversational service therethrough.

FIG. 3 illustrates an IMS network registration procedure of a UE with IMS communication service support information for accessibility enhancement of the UE using a media feature tag for accessibility enhancement when registering the UE in an IP multimedia subsystem (IMS) according to an embodiment of the disclosure.

In FIG. 3, the UE may register service feature-related information based on the value of the IMS communication identifier in the contact header field when registering UE-related information in the IMS network using an SIP message. For example, the IMS multimedia telephony service may be indicated through the value of the IMS communication identifier in the contact header field in the session initiation protocol (SIP) message and, in the case of voice call, 'Audio' may be included in the contact header field through the media feature tag and, in the case of video or video call, 'Video' may be transferred together through the media feature tag to specifically express the service feature information (service specific aspects) when registering the IMS service.

In step 301, according to the user's selection or predefined settings, the UE may transfer, to the proxy call session control function (P-CSCF), a registration request message including a list of IMS communication-based services that may be provided by the UE to perform the IMS registration process. According to an embodiment, the registration request message may include, in the contact header, an IMS communication service identifier (ICSI) for IMS multimedia telephony, a feature tag for SMS through IP, an IMS public user identity, IMS private user identity as NAI, P-Access-Network-Info, request-URI set as SIP-URI of the domain name of the home network, and header for IMS AKA parameter.

It may be included when transmitting the registration message in the IMS network requested by the UE based on the media feature tag to use the IMS communication service using caption/subtitle information and sign language for IMS multimedia service supporting accessibility enhancement as well as existing voice or video-based service as in FIG. 1. For example, to express "Accessibility" for expressing IMS multimedia telephony service supporting accessibility enhancement or express a desired service type in the specific accessibility enhancement service, "Accessibility.SL" in the case of sign language-based IMS communication service request or "Accessibility.Caption" or "Accessibility.Cap" in the case of caption-based IMS communication service request may be defined, and service information for using the IMS communication service for accessibility enhancement may be transferred through the SIM message during the registration process.

Through step 302 and step 303, the P-CSCF may request the PLMN ID to know the current location of the UE from the PCF and request a notification as to whether the PLMN ID is varied.

In step 304, the P-CSCF receives an SIP REGISTER request from the UE and, for routing, transfers, to the I-CSCF, the path header including the SIP-URI of the P-CSCF, the P-Charging-Vector header including icid-value, PVisited-Network-ID for identifying the network domain of the P-CSCF, and the PLMN ID received through the step. The I-CSCF name may be determined through DNS query or preconfigured in the P-CSCF.

The I-CSCF may query the HSS obtaining the S-CSCF NAME for public user identity and using the user authorization request for authentication. The HSS may identify that public user identity and private user identity are valid and not prohibited. If there is no S-CSCF associated with public user identity, the HSS may respond with information related to S-CSCF functions (capabilities) that allow the I-CSCF to select the appropriate S-CSCF. Once the S-CSCF is identified, the I-CSCF may transmit an SIP REGISTER request to the S-CSCF.

The S-CSCF may identify whether the SIP REGISTER is an initial IMS registration or a refresh registration with IMS-AKA-related security. The S-CSCF may transmit a multimedia authentication request to the HSS to receive authentication vectors to perform IMS-AKA security. The HSS may store the relevant SCSCF NAME for registered public user identity and respond to the S-CSCF with authentication vectors.

In step 305, the UE receiving the 200 OK response message transmitted from the S-CSCF, the I-CSCF, and the P-CSCF may complete the IMS registration procedure for using the IMS multimedia telephony service supporting the accessibility enhancement.

If a registered UE then attempts a call, the IMS multimedia telephony service requested by the UE executes accessibility-related logic with priority according to whether the UE is registered for the pre-registered multimedia telephony service for accessibility enhancement.

Upon registration, the service specific aspects may be implemented as follows.

For MMTEL Voice/Conversational Video,
UE must include the IMS Communication Service Identifier (ICSI) value used to indicate the IMS Multimedia Telephony service
urn: urn-7: 3gppservice.ims.icsi.mmtel
The UE must also include the "audio" media feature tag
the UE must additionally indicate the capability to handle MMTEL conversational video calls by adding a "video" media feature tag
the UE must additionally indicate the capability to handle MMTEL conversational 3d avatar calls by adding a "3D model" media feature tag
the UE must additionally indicate the capability to handle MMTEL conversational 3d avatar calls with accessibility for supporting sign language by adding a "Accessibility.3DSL" or "3D Avatar Sign language" media feature tag
   Or
For MMTEL Conversational for supporting Accessibility,
the UE must additionally indicate the capability to handle MMTEL conversational with accessibility for supporting sign language by adding a "Accessibility.SL" or "Sign language" media feature tag
the UE must additionally indicate the capability to handle MMTEL conversational with accessibility for supporting caption by adding a "Accessibility.cap" or "caption" or "text" media feature tag

FIGS. 4A, 4B, and 4C illustrate operations for bootstrap data channel connection for supporting an IMS communication service for accessibility enhancement in an IP multimedia subsystem (IMS) according to an embodiment of the disclosure.

In step 401, as illustrated in FIG. 2(a), the originating UE, UE#1, may transmit an SIP INVITE message including the first SDP information to the application server (AS) to perform connection of a service for accessibility enhancement such as conversational service using sign language. The P-CSCF and S-CSCF transfer the same.

Bootstrap data channel establishment requirement information may be included in the initial SDP, and in this example, bootstrap data channel offer information for both the originating and terminating sides may be included. In the SIP INVITE message, information related to accessibility for using accessibility services as well as the existing video/audio-based services may be added to the m=Accessibility field and transferred together.

According to an embodiment, the accessibility-related information may include basic requirements for providing accessibility, including accessibility service type (Sing Language, Caption etc.), default use language information of the user UE, a depth camera, and whether 3D modeling is supported. Based on the basic requirements for providing accessibility for each UE, they may exchange with each other based on SDP offer and answer. Based on the information, additional media functions for providing accessibility services may be used for network or application download when each UE is in different operator networks or different regions or uses different languages.

In order to discover an application for providing a service for accessibility enhancement when connecting a bootstrap DC channel, only media information such as the existing video or audio-based codec may be considered and the application may be found or provided in DCRF in DCMF based thereon. When different languages are used to provide accessibility enhancement service, this may be transferred to the IMS AS and, when generating the accessibility enhancement service support function in the network, the capabilities of different UEs and the service function providing the media function providing the translation function for changing different languages into a common language may be considered. For example, when UE #1 enables avatar rendering, but counterpart UE#2 does not provide the avatar rendering function to the UE, upon allocating the media service-related media function for supporting accessibility enhancement of UE#2 to the network, avatar rendering may be performed in the network, and AS settings for supporting the multimedia service support function in the network to provide the same, as RTP-type existing video service to UE#2 may be required.

In step 402, the IMS AS may identify the validity of the user subscription data to determine whether the DC call request should be triggered by the DCSF. If the IMS AS determines that the DC call request should be transmitted to the DCSF, the IMS AS may select the DCSF for the user based on the search and selection of the DCSF instance through the NRF or the local configuration. If the IMS AS determines that the DC call request does not need to be transmitted to the DCSF, or the DCSF determines that the DC request is not allowed, the IMS AS may proceed with normal IMS procedures to establish an MMTel session without performing DC bootstrapping. Further, if the UE uses video or text-based accessibility enhancement services using the existing MMTel session considering the UE performance for using a service for accessibility enhancement of the UE, the IMS AS may proceed with the IMS procedure based on the UE's performance without performing separate DC bootstrapping.

In step 403, the IMS AS may transfer a call event to the DCSF by transmitting a Nimsas_SessionEventControl_Notify request to the DCSF. The IMS AS session event control notification request message may include information such as SessionEstablishmentRequestEvent, CallingID, CalledID, SessionCase, SessionID, and MediainfoList. The IMS AS may provide information such as IMPU and location information of UE#1 to the DCSF. The MediaInfoList may include related information such as service requirements for accessibility services and UE performance in the SIP message.

The DCSF receiving the DC control request in step 404 may determine a policy for a method for processing the bootstrap data channel setting requirements based on the DC control request or the operator's policy-related parameters.

In step 405, the SessionEstablishmentRequestEvent indicates that the service user has provided the local bootstrap media, so that the DCSF may not only prepare for originating MDC1 media information for the DCMF according to the policy, but also prepare for receiving MDC1 remote bootstrap media.

In step 406, the DCSF may transfer the Nims_MediaControl_MediaInstruction information to the IMS AS based on the policy. The Nims_MediaControl_MediaInstruction information may include a SessionID, a MediaInstructionSet including media service configuration information for accessibility enhancement, or the like. If different language-based sign language services are used and each UE has a 3D model rendering function, it may be transmitted in the form of motion operation or video to the network based on the application recognizing the user's sign language and, when the network provides the media function of converting sign language into text, a media function for converting the same into text and translating the same into a common language may also be additionally configured. Further, an avatar generation media function may also be added that transfers the sign language information created in the common language to the counterpart UE, translates or converts it back into the language desired of the user of the remote network or the counterpart, and generates an avatar sign language gesture based on the text in the language. The DCSF may determine what media function the network is to support based on the related service information for accessibility enhancement received from the SIP and configure the same based on the MediaInstructionSet information. Further, it may be received as binding information including information on media functions for accessibility enhancement.

In step 407, the IMS AS may select DCMF based on the media function information (e.g., media functions that provide sign language translation and generation) and local configuration, or select DCMF through NRF search and selection of DC media functions that support DCMF instances or enhanced MRF.

In step 408, the IMS AS may call the DCMF service and instruct the DCMF to allocate the Mb resource for terminating the media descriptor designated by the DCSF to the originating side.

In step 409, the IMS AS may call the DCMF service to instruct the DCMF to allocate MB resources to terminate the media designated by the DCSF for the terminating.

In step 410, the MediaInstruction request received in step 406 may be responded. The response may include the media resource information and success in work received by the IMS AS.

In step 411, the DCSF may store media resource information and respond to the notification request message received in step 403.

In steps 412 to 414, the IMS AS may transfer an INVITE message including the updated SDP offer information to the originating S-CSCF. In the message, the media information of DCMF or enhanced MRF may be added and transferred to the S-CSCF. It may also be transferred to the terminating-side network and UE#2. In this case, an SDP offer for the bootstrap data channel for the UE#2 may be included.

In steps 415 to 417, the UE#2 and the originating network may transfer an SDP answer including 18X for the bootstrap DC to the originating network. If the terminating network determines to set up another bootstrap DC for UE#1 and UE#2, the corresponding data channel media description may also be included in the SDP answer.

In step 418, the IMS AS may call the DCMF service and instruct the DCMF to modify the data channel media resource based on the DCP response message received from the terminating network.

In steps 419 to 420, the IMS AS may modify the SDP answer message for the bootstrap channel for UE#1 in the 18X response and/or the remote bootstrap data channel of UE#1 and transfer it to the S-CSCF and the P-CSCF through the 18X response message.

In step 421, the P-CSCF of the originating network may execute a QoS process for the bootstrap data channel media based on the SDP answer information of the 18X response message.

In step 422, the P-CSCF may return the 18X response message to the UE#1.

In step 423, a PRACK and UPDATE negotiation process between the originating network and the terminating network may be performed.

In steps 424 to 425, the UE#2 and the terminating network may return the 200 OK response message.

In step 426, the IMS AS may notify the DCSF of a successful session establishment event through Nimsas_SessionEventControl_Notify. The IMS AS may provide information such as IMPU and location information of UE#2 to the DCSF.

In step 427, the DCSF may respond to the successful session establishment event notification received in step 26.

In steps 428 to 430, the 200 OK message may be transferred to the UE#1.

In steps 431 to 432, a bootstrap data channel may be generated between the originating DCMF or the enhanced MRF and UE#1/UE#2. The UE may transmit an application request message to the DCMF or the enhanced MRF. The DCMF or enhanced MRF may forward the message to the received media point of the DCSF. The DCSF may provide an appropriate data channel application to UE#1 and UE#2 through the DCMF or enhanced MRF. When information such as minimum UE requirements for supporting the application is provided when each UE selects an application in steps 431 and 432, or when separate UE information is not transmitted in the SIP, the UE may request an application that each UE may support based on the information of the minimum requirements supported by the UE from the received application list. In order to support multiple simultaneous DC applications at the UE, information for binding the DC application and the related DC, such as DC application ID, may be required, and the UE may receive binding information from the bootstrap DC. The binding information may be transmitted as information in the SDP from the UE to be used to support DC path selection in the DC server and to synchronize the DC application used for the call with the peer UE. The binding information may vary according to the function supported by the application of the UE and the function of the DC AS connected to the corresponding application.

Assuming that the UE performs motion capture using a video or depth camera and performs an operation of converting sign language information into text and provides an application to support it, the network may require only the function of converting the text into a common language or simply transferring it to the terminating network. Further, also at the terminating network, the AS connection information included in the binding information is varied depending on whether the function of converting text into an avatar is to be performed by the application in the UE or whether a separate AS is requested for connection in the network. In order to provide binding information in this way, various application IDs may be provided according to the user's UE and network circumstance to be selected by the UE, or an appropriate DC application ID may be selected and indicated based on, e.g., the requirements of the UE transferred through the SIP by the network, i.e., the IMS AS. By looking at the SDP answer message in the bootstrap DC, the UE may select an appropriate DC application ID considering the UE's performance requirement to request and receive the application bound to the application ID and, also upon later application DC connection request, routing information for AS connection in the bound information may be included to request application DC connection. The binding information using the DC application ID may be defined by, e.g., the operator's settings to support special media requirements such as services for accessibility enhancement so that, upon registration in the IMS network, the UE may map the binding information to the UE's call ID and, when the UE requests a conversational service later, it may provide the stored binding information or, when generating bootstrap DC, dynamically generate binding information including appropriate AS information and application information and provide the same to the UE.

In step 433, a bootstrap data channel between the terminating DCMF or the enhanced MRF and the UE#1/UE#2 may be generated. The UE#1 and the UE#2 may request and download the data channel application from the terminating DCSF. In step 433, the UE may receive the received application list and the minimum requirement information for it, select an appropriate application for its UE from the application list, and download it through the DCMF or enhanced MRF. A subsequent procedure may be performed in step 434.

FIGS. 5A and 5B illustrate an application data channel connection establishment process for transmission of data between UEs using a corresponding application after receiving downloading a relevant service-related application and receiving information through bootstrap data channel connection establishment.

As illustrated in FIG. 2(a), it may be known that it is possible to receive, during the bootstrap data channel process, an application that generates sign language-based text based on the recognition of sign language and the corresponding language and translates text of a specific language into the common language (i.e., English) and, for use of a real-time conversational service, if communication is possible that supports sign language in the form of a person-to-person (P2P) application data channel through data channel connection between the applications between UEs, the application data channel as illustrated in FIG. 5 may be performed. It is assumed that the application of each UE may perform functions such as converting sign language information provided by each IMS network of FIG. 2(a) into text, translating the text into the common language, and creating an avatar animation based on text written in the common language.

In step 500, the IMS session and the bootstrap data channel are connected, and the UE#1 and the UE#2 may download the data channel application. Further, the DC application ID may be received through the SDP in the bootstrap data channel, and the information may be used to support the same application request from different UEs and DC path selection in the DC server (media function request or DC AS server connection request). The UE may perform a network path request to the DC AS supporting the media function for accessibility enhancement upon application DC connection request based on the binding information including information of media functions and selection of the DC AS server for supporting accessibility using the DC application ID.

In step 501, the UE#1 may transfer a SIP reINVITE message including updated SDP information including the DC application ID to the IMS AS via the P-SCSF and S-CSCF of the originating network. The updated SDP information may include a stream ID, a stream label, or the like indicating application data channel connection requirements as well as bootstrap data channel information on which the connection is established.

In step 502, the IMS AS may determine whether it is valid to transfer the media change request to the DCSF based on the user subscription data information.

In step 503, if it is determined that the media change information may be transferred based on the user subscription data information in the above-described step, the IMS AS may inform the DCSF of the media update request event through the Nimsas_SessionEventControl_Notify message. MediaChangeRequest Event, SessionID, EventDirection, MediaInfoList, DC application ID, or the like may be included and transferred in the update request message. The IMS AS may provide information such as IMPU and location information of UE#1 to the DCSF.

In step 504, upon receiving the session event notification, the DCSF may determine the policy for how to handle the application data channel connection requirement based on the parameter and/or the operator's policy, including the relevant DC application ID in the session event control notification message received in step 3.

In step 505, the DCSF may determine that the added application data channel media in the proposed message uses UE#2 as a target endpoint that does not require anchoring in the local DCMF or enhanced MRF.

In step 506, the DCSF may transfer a response message to the notification message received in step 503.

In steps 507 and 508, the IMS AS may transfer the SIP reINVITE message to the originating S-CSCF, and the S-CSCF may transfer the message back to the terminating network and the UE#2.

After performing the terminating network negotiation process in steps 509 and 511, for the corresponding result value, the SDP answer message including the application DC information may be included in the 200 OK response message and transferred to the originating network.

In steps 512 and 513, the IMS AS may inform the DCSF that the data channel modification has been successfully performed. The DCSF may transfer a response to the corresponding notification to the IMS AS.

In steps 514 and 515, the IMS AS may transfer the 200 OK response including the SDP answer of the application DC to the UE#1 through the S-CSCF and the P-CSCF.

In step 516, the originating network P-CSCF may perform a QOS process for the application DC media based on the SDP answer information in the 200 OK response message through step 515.

In step 517, the P-CSCF may transfer the 200 OK response to the UE#1.

In step 518, the UE#1 may transfer an ACK to the counterpart network.

In step 519, an application data channel connection for exchange of application data between UE#1 and the UE#2 may be established.

FIGS. 6A and 6B illustrate an application data channel connection establishment process for transmission of data between UEs using a corresponding application after receiving downloading a relevant service-related application and receiving information through bootstrap data channel connection establishment.

As in (a) of FIG. 2, when media functions of recognition of sign language and sign language-based text generation based on the corresponding language, and translation of text in a specific language into the common language (i.e., English) are allocated, an application for transferring media data supported in the network to the AS may be received during the bootstrap data channel process, and IMS communication service is possible that supports sign language through the application data channel of person-to-application (P2A) or application server-to-person (A2P) through application data channel connection with the application server in the application between UEs to use a real-time conversational service, the IMS communication service may be performed for accessibility enhancement through connection request for the application data channel as illustrated in FIG. 6.

It is assumed that the application server of each network may perform functions such as converting sign language information provided by each IMS network of FIG. 2(a) into text, translating the text into the common language, and creating an avatar animation based on text written in the common language.

As illustrated in FIG. 2(b), when using a conversational service between the user not providing a general accessibility enhancement-based service and a user using a conversational service based on accessibility enhancement, the general user's voice-based information may be converted into text, and the same may be converted into a media form for supporting accessibility enhancement based on sign language using an avatar and, conversely, it may be converted into text-based sign language gesture information based on the gesture information of the user using the sign language-based conversational service. Conversion into voice-based information is performed based on the language used by the user of the originating UE based on the corresponding text information, and it is provided to the user of the originating UE. In this case, each user may use a conversational service based on the conversational service request registration information having the priority registered by it in the process of FIG. 3 before without its respective request.

In step 600, an IMS session establishment and bootstrap data channel connection operation may be performed, and the application for providing service support for accessibility enhancement may be downloaded by each UE. Further, the DC application ID may be received through the SDP in the bootstrap data channel, and the information may be used to support the same application request from different UEs and DC path selection in the DC server (media function request or DC AS server connection request). The UE may perform a network path request to the DC AS supporting the media function for accessibility enhancement upon application DC connection request based on the binding information including information of media functions and selection of the DC AS server for supporting accessibility using the DC application ID. According to the service scenario, each UE may use different DC application IDs when the media functions supported in the network differ according to the performance and requirements of the UE and the media function supported by each network or the same DC application ID is used.

In step 601, as illustrated in FIG. 2(a), the originating UE transfers a service for accessibility enhancement such as a conversational service using sign language to the AS providing the media conversion and generation function in the network using the application, the AS in each network provides the media conversion and avatar generation function and, to perform the data channel connection of the application for transmission/reception of the corresponding information, the UE#1 transfers an SIP reINVITE message including relevant SDP offer information for performing audio, video, bootstrap DC and application connection to the IMS application server (AS). It may be transferred through the P-CSCF and S-CSCF.

In step 602, the IMS AS may identify the validity of the user subscription data to determine whether the DC call request should be triggered by the DCSF. If the IMS AS determines that the DC call request should be transmitted to the DCSF, the IMS AS may select the DCSF for the user based on the search and selection of the DCSF instance through the NRF or the local configuration.

In step 603, the IMS AS may transfer a call event to the DCSF by transmitting a Nimsas_SessionEventControl_Notify request message to the DCSF. The IMS AS session event control notification request message may include information such as mediaChangeRequestEvent, SessionID, MediainfoList, or EventInitiator.

In step 604, upon receiving the session event notification message, the DCSF may determine the policy for how to handle the application data channel connection requirement based on the parameter and/or the operator's policy and/or the relevant parameter in the session event control notification message received in step 3.

In step 605, the DCSF may determine that the local DCMF or enhanced MRF DCSF is used as the target endpoint where the application data channel media added in the offer should anchor the DC application server to the local DCMF or enhanced MRF. The DCSF performs communication for DC resource control with the DC AS and, if the application data channel is connected, the DC AS may transmit and/or receive the traffic, which is received or transferred from the UE #1, through the MDC2.

In step 606, the DCSF may call a Nimsas media control (MediaControl) service and include information about the method for relaying data channel media through the MDC2 interface and instruct the IMS AS to connect the media to the DCMF.

In step 607, the IMS AS may call a DCMF service to instruct the DCMF for data channel setup and data channel media resource reservation based on the DC media information received from the DCSF.

In step 608, the IMS AS may transfer a MediaControl command control response to the DCSF.

In step 609, the DCSF may store the media resource information, establish an MDC1 connection for application DC traffic of the UE#1 with the DCMF or enhanced MRF, and transmit a response message to the Nimsas notification request.

In steps 610 to 611, the IMS AS may send a reINVITE not including the SDP offer for the application data channel to the originating S-CSCF and then transmit it the terminating network and the UE#2.

In steps 612 to 614, the UE#2 and the terminating network may perform a negotiation process for the supportable service based on the information received in the above-described step and transfer a 200 OK message together with the SDP answer for the audio/video and bootstrap DC to the originating S-CSCF and then transfer the same to the IMS AS.

In steps 615 and 616, the IMS AS may inform the DCSF of information about the successful result of the MediaChangeRequest event. The DCSF may transfer a response to the corresponding notification to the IMS AS.

In steps 617 and 618, the IMS AS may transfer the 200 OK response including the SDP answer of the application DC to the UE#1 through the S-CSCF and the P-CSCF.

In step 619, the originating network P-CSCF may perform a QOS process for the application DC media based on the SDP answer information in the 200 OK response message through step 618.

In step 620, the P-CSCF may transfer the 200 OK response to the UE#1.

In step 621, the UE#1 may transfer an ACK to the counterpart network.

In step 622, an application data channel that passes through the DCMF or enhanced MRF may be established between the UE#1 and the DC AS. The DCMF or enhanced MRF may forward data channel traffic between the UE#1 and the DC AS based on the MDC2 media point information received in step 606.

FIG. 7 illustrates an example of the register message illustrated in FIG. 3 according to an embodiment of the disclosure.

Referring to FIG. 7, the register message transmitted to the P-CSCF by the UE may include "Accessibility.SL". The service information for use of an IMS communication service for accessibility enhancement may be transferred through an SIP message during UE registration process. According to an embodiment, to express a desired service type in a specific accessibility enhancement service, a sign language-based IMS communication service request may be defined as "Accessibility.SL" and transmitted.

For example, the register message may be configured as follows.

```
            REGISTER sip:test.3gpp.com SIP/2.0
            Route: <sip:[2001.:0:0:1::2]:5060;lr>
            Allow: INVITE,ACK,OPTIONS,CANCEL,BYE,UPDATE,INFO,REFER,NOTIFY,MESSAGE,PRACK
            Expires: 600000
            Authorization: Digest username="001010123456789@test 3gpp.com",realm="TestIMS.com",
                     nonce="fn3iiH1LnWqCtFyPUD8qzYxfliVavYAAmfcxByxmhBg:",algorithm=AKAv1-MD5,
                     uri="sip:test.3gpp.com".response="9f17517adee640b8895dda33b3361071",
                     qop=auth,nc=00000002,cnonce="dsf232sun2299674910xyx",
                     opaque="bbedd3dd5f884860b741b03d36b430ea"
            P-Access-Network-Info: 3GPP-E-UTRAN-FDD;utran-cell-id-3gpp=0010100010000001
            Contact: <sip: +11234567890@[2001:0:0:1::1):5060>;
                  +g.3gpp-smsip;
                  +g.3gpp.icsi-ref="urn%3Aurn-7%3A3gpp-service.ims.icsi.mmtel";Accessibility.SL;
                +g.gsma,rcs.telephony="cs.volte";
                +sip.instance="<urn:gsma:imei:99000493-686661-0>"
            From: <sip:+11234567890@test.3gpp.com>;tag=1334507655
            To: <sip:+11234567890@test.3gpp.com>
            Call-ID: 266901530@2001:0:0:1::1
            CSeq: 4 REGISTER
            Max-Forwards: 70
            Via: SIP/2.0/UDP [2001:0:0:1::1]:5060;branch=z9hG4bK459934981smg;transport=UDP
            Content-Length: 0
```

FIG. 8 illustrates a structure of a UE according to an embodiment of the disclosure.

The UE of FIG. 8 may be any one of the UEs described in FIGS. 1 to 7. Referring to FIG. 8, the UE may include a transceiver 810, memory 820, and a controller 830.

The transceiver 810, controller 830, and memory 820 of the UE may be operated according to the above-described device communication method. However, the components of the UE are not limited thereto. For example, the UE may include more or fewer components than the above-described components. The transceiver 810, the controller 830, and the memory 820 may be implemented in the form of a single chip. The controller 830 may include one or more processors.

The transceiver 810 may also be referred to as a transmission/reception unit. The transceiver 810 collectively refers to a receiver of the UE and a transmitter of the electronic device and may transmit and receive signals to/from another device. To that end, the transceiver 810 may include a radio frequency (RF) transmitter for frequency-up converting and amplifying signals transmitted and an RF receiver for low-noise amplifying signals received and frequency-down converting the frequency of the received signals. However, this is merely an embodiment of the transceiver 810, and the components of the transceiver 810 are not limited to the RF transmitter and the RF receiver.

The transceiver 810 may receive signals via a radio channel, output the signals to the controller 830, and transmit signals output from the controller 830 via a radio channel.

The memory 820 may store programs and data necessary for the operation of the UE. The memory 820 may store control information or data that is included in the signal obtained by the UE. The memory 820 may include a storage medium, such as ROM, RAM, hard disk, CD-ROM, and DVD, or a combination of storage media. Rather than being separately provided, the memory 820 may be embedded in the controller 830.

The controller 830 may control a series of processes for the UE to be able to operate according to the above-described embodiments.

According to an embodiment, an originating UE for performing a media call service in a wireless communication network comprises a transceiver, and a processor configured to control the transceiver. The processor is configured to transmit, to a terminating UE, a first session description protocol (SDP) offer message including information indicating a media type supporting at least one accessibility enhancement and information about whether the originating UE supports media information supporting the at least one accessibility enhancement, receive, from the terminating UE, an SDP answer message including information about whether the terminating UE supports the media information supporting the at least one accessibility enhancement in response to the first SDP offer message, generate the media information supporting the at least one accessibility enhancement based on the information about whether the terminating UE supports included in the SDP answer message, and control to perform a call service supporting accessibility enhancement with the terminating UE using the generated media information supporting the accessibility enhancement.

According to an embodiment, a terminating UE for performing a media call service in a wireless communication network comprises a transceiver, and a processor configured to control the transceiver. The processor is configured to receive, from an originating UE, a first SDP offer message including information indicating a media type supporting at least one accessibility enhancement and information about whether the originating UE supports media supporting the at least one accessibility enhancement, transmit, to the originating UE, an SDP answer message including information about whether the terminating UE supports media supporting the at least one accessibility enhancement in response to the first SDP offer message, generate the media information supporting the at least one accessibility enhancement based on the information about whether the terminating UE supports included in the SDP answer message, and control to perform a call service supporting accessibility enhancement with the originating UE using the generated motion information.

FIG. 9 illustrates a structure of a network entity according to an embodiment of the disclosure.

The network entity of FIG. 9 may be implemented as any one of the P-CSCF, I/S-CSCF, IMA AS, DCSF, DCMF/enhanced MRF, terminating network, or DC application server described in FIGS. 1 to 6. Referring to FIG. 9, the network entity may include a transceiver 910, memory 920, and a controller 930.

The transceiver 910, controller 930, and memory 920 of the network entity may be operated according to the above-described device communication method. However, the network entity may include more or fewer components than the above-described components. The transceiver 910, the controller 930, and the memory 920 may be implemented in the form of a single chip. The controller 930 may include one or more processors.

The transceiver 910 may also be referred to as a transmission/reception unit. The transceiver 910 collectively refers to a receiver of the second electronic device and a transmitter of the electronic device and may transmit and receive signals to/from another device. To that end, the transceiver 910 may include a radio frequency (RF) transmitter for frequency-up converting and amplifying signals transmitted and an RF receiver for low-noise amplifying signals received and frequency-down converting the frequency of the received signals. However, this is merely an embodiment of the transceiver 910, and the components of the transceiver 910 are not limited to the RF transmitter and the RF receiver.

The transceiver 910 may receive signals via a radio channel, output the signals to the controller 930, and transmit signals output from the controller 930 via a radio channel.

The memory 920 may store programs and data necessary for the operation of the network entity. Further, the memory 920 may store control information or data that is included in the signal obtained by the network entity. The memory 920 may include a storage medium, such as ROM, RAM, hard disk, CD-ROM, and DVD, or a combination of storage media. Rather than being separately provided, the memory 920 may be embedded in the controller 930.

The controller 930 may control a series of processes for the network entity to be able to operate according to the above-described embodiments.

The methods according to the embodiments descried in the specification or claims of the disclosure may be implemented in hardware, software, or a combination of hardware and software.

When implemented in software, there may be provided a computer readable storage medium storing one or more programs (software modules). One or more programs stored in the computer readable storage medium are configured to be executed by one or more processors in an electronic device. One or more programs include instructions that enable the electronic device to execute methods according to the embodiments described in the specification or claims of the disclosure.

The programs (software modules or software) may be stored in random access memories, non-volatile memories including flash memories, read-only memories (ROMs), electrically erasable programmable read-only memories (EEPROMs), magnetic disc storage devices, compact-disc ROMs, digital versatile discs (DVDs), or other types of optical storage devices, or magnetic cassettes. Or, the programs may be stored in memory constituted of a combination of all or some thereof. As each constituting memory, multiple ones may be included.

The programs may be stored in attachable storage devices that may be accessed via a communication network, such as the Internet, Intranet, local area network (LAN), wide area network (WLAN), or storage area network (SAN) or a communication network configured of a combination thereof. The storage device may connect to the device that performs embodiments of the disclosure via an external port. A separate storage device over the communication network may be connected to the device that performs embodiments of the disclosure.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Although specific embodiments of the present invention have been described above, various changes may be made thereto without departing from the scope of the present invention. Thus, the scope of the disclosure should not be limited to the above-described embodiments, and should rather be defined by the following claims and equivalents thereof.

## Claims

1. A method for performing a media call service of an originating user equipment (UE) in a wireless communication network, the method comprising:
transmitting, to a terminating UE, a session description protocol (SDP) offer message including information indicating a media type supporting at least one accessibility enhancement and media parameter information supporting the at least one accessibility enhancement;
receiving, from the terminating UE, an SDP answer message including information about whether the terminating UE supports the media type supporting the at least one accessibility enhancement in response to the SDP offer message;
generating the media information supporting the at least one accessibility enhancement based on the information about whether the terminating UE supports included in the SDP answer message; and
performing a call service supporting accessibility enhancement with the terminating UE using the media information supporting the at least one accessibility enhancement.

2. The method of claim 1, further comprising:
converting media information captured by the originating UE into a text format; and
generating the media information supporting the at least one accessibility enhancement according to sign language motion information corresponding to the converted text format.

3. The method of claim 1, wherein each of the originating UE and the terminating UE supports a 3D object content, and wherein the 3D object content is a 3D asset file in the form of a mesh composed of 3D object geometry and texture, or a 3D asset file in the form of point cloud compression (PCC) composed of a 3D projection image and 3D object geometry.

4. The method of claim 1, the SDP offer message further includes at least one of information for establishing a bootstrap data channel, default use language information of the originating UE, information regarding a depth camera of the originating UE, or 3D model rendering support information.

5. A method for performing a media call service of a terminating UE in a wireless communication network, the method comprising:
receiving, from an originating UE, a session description protocol (SDP) offer message including information indicating a media type supporting at least one accessibility enhancement and information about whether the originating UE supports media-related information supporting the at least one accessibility enhancement;
transmitting, to the originating UE, an SDP answer message including information about whether the terminating UE supports media supporting the at least one accessibility enhancement in response to the SDP offer message;
generating the media information supporting the at least one accessibility enhancement based on the information about whether the terminating UE supports included in the SDP answer message; and
performing a call service supporting accessibility enhancement with the originating UE using the media information supporting the at least one accessibility enhancement.

6. The method of claim 5, further comprising:
converting media information captured by the terminating UE into a text format; and
generating the media information supporting the at least one accessibility enhancement according to sign language motion information corresponding to the converted text format.

7. The method of claim 5, wherein each of the originating UE and the terminating UE supports a 3D object content, and wherein the 3D object content is a 3D asset file in the form of a mesh composed of 3D object geometry and texture, or a 3D asset file in the form of point cloud compression (PCC) composed of a 3D projection image and 3D object geometry.

8. The method of claim 5, the SDP offer message further includes at least one of information for establishing a bootstrap data channel, default use language information of the originating UE, information regarding a depth camera of the originating UE, or 3D model rendering support information.

9. An originating UE for performing a media call service in a wireless communication network, comprising:
a transceiver; and
a processor configured to control the transceiver, wherein the processor is configured to:
control to transmit, to a terminating UE, a session description protocol (SDP) offer message including information indicating a media type supporting at least one accessibility enhancement and information about whether the originating UE supports media information supporting the at least one accessibility enhancement;
receive, from the terminating UE, an SDP answer message including information about whether the terminating UE supports the media information supporting the at least one accessibility enhancement in response to the SDP offer message;
generate the media information supporting the at least one accessibility enhancement based on the information about whether the terminating UE supports included in the SDP answer message; and
control to perform a call service supporting accessibility enhancement with the terminating UE using the generated media information supporting the accessibility enhancement.

10. The originating UE of claim 9, wherein the processor is configured to:
convert media information captured by the originating UE into a text format; and
generate the media information supporting the at least one accessibility enhancement according to sign language motion information corresponding to the converted text format.

11. The originating UE of claim 9, wherein each of the originating UE and the terminating UE supports a 3D object content, and wherein the 3D object content is a 3D asset file in the form of a mesh composed of 3D object geometry and texture, or a 3D asset file in the form of point cloud compression (PCC) composed of a 3D projection image and 3D object geometry.

12. The originating UE of claim 9, the SDP offer message further includes at least one of:
information for establishing a bootstrap data channel, default use language information of the originating UE, information regarding a depth camera of the originating UE, or 3D model rendering support information.

13. A terminating UE for performing a media call service in a wireless communication network, comprising:
a transceiver; and
a processor configured to control the transceiver, wherein the processor is configured to:
receive, from an originating UE, a first SDP offer message including information indicating a media type supporting at least one accessibility enhancement and information about whether the originating UE supports media supporting the at least one accessibility enhancement;
control to transmit, to the originating UE, an SDP answer message including information about whether the terminating UE supports media supporting the at least one accessibility enhancement in response to the first SDP offer message;
generate the media information supporting the at least one accessibility enhancement based on the information about whether the terminating UE supports included in the SDP answer message; and
control to perform a call service supporting accessibility enhancement with the originating UE using the generated motion information.

14. The terminating UE of claim 13, wherein each of the originating UE and the terminating UE supports a 3D object content, and wherein the 3D object content is a 3D asset file in the form of a mesh composed of 3D object geometry and texture, or a 3D asset file in the form of point cloud compression (PCC) composed of a 3D projection image and 3D object geometry.

15. The terminating UE of claim 13, the SDP offer message further includes at least one of:
information for establishing a bootstrap data channel, default use language information of the originating UE, information regarding a depth camera of the originating UE, or 3D model rendering support information.
